# EUROPÄISCHE PATENTSCHRIFT

(11) **EP 2 670 078 B1**
(45) Veröffentlichungstag und Bekanntmachung des Hinweises auf die Patenterteilung: **15.04.2015**
(21) Anmeldenummer: 12169919.3
(22) Anmeldetag: 30.05.2012
(51) Int. Cl.: H04L 12/939

(54) **Kommunikationsgerät für ein redundant betreibbares industrielles Kommunikationsnetz und Verfahren zum Betrieb eines Kommunikationsgeräts**
Communication device for a redundant industrial communication network and method for operating a communication device
Appareil de communication pour un réseau de communication industriel fonctionnant de manière redondante et procédé de fonctionnement d'un appareil de communication

(43) Veröffentlichungstag der Anmeldung: 04.12.2013
(73) Patentinhaber: Siemens Aktiengesellschaft, 80333 München (DE)
(72) Erfinder: Angst, Hermann, 76199 Karlsruhe (DE); Lohmeyer, Joachim, 91161 Hilpoltstein (DE); Kasper, Michael, 90411 Nürnberg (DE)

(56) Entgegenhaltungen:
- EP-A1- 1 657 888
- DE-A1-102006 060 222
- DE-A1-102008 031 376
- US-A1- 2004 146 004
- IEC 62439: "Part 3: Parallel Redundancy Protocol (PRP) andHigh-availability Seamless Redundancy (HSR)", , 31. Dezember 2010 (2010-12-31), XP002680227, Gefunden im Internet: URL:http://lamspeople.epfl.ch/kirrmann/Pub s/IEC_61439-3/WG15-12-04d_62439-3_AMD_HK_1 01109.pdf [gefunden am 2012-07-18]

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden, da dies innerhalb eines industriellen Automatisierungssystems zu inkonsistenten Systemzuständen und Systemausfällen mit wirtschaftlich gravierenden Stillstandszeiten führen kann.

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten.

Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

High-availability Seamless Redundancy (HSR) und Parallel Redundancy Protocol (PRP) sind im Standard IEC 62439-3 definiert und ermöglichen eine stoßfreie redundante Übertragung von Nachrichten. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine solche Netzkomponente, die Telegramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR-oder PRP-Kommunikationsnetz mehrere HSR-Ringe verbinden oder Kommunikation zwischen HSR- und PRP-Netzsegmenten umsetzen, siehe z.B. EP 1 657 888. In diesem Fall wird die Netzkomponente als HSR-HSR-Koppler oder QuadBox bzw. HSR-PRP-Koppler bezeichnet.

Aus EP 2 165 474 A2 ist ein Verfahren zum Betreiben eines Netzes bekannt, das einen Switch sowie daran angeschlossene Netzinfrastrukturgeräte aufweist. Der Switch wird von einer Steuereinheit gesteuert. Eine zwischen den Switch und die Steuereinheit geschaltete Redundanzeinheit analysiert einen Datenstrom zwischen Switch und Steuereinheit und fügt in Abhängigkeit von einem Analyseergebnis Daten in den Datenstrom ein bzw. entfernt Daten aus dem Datenstrom.

In EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder einen leeren Datenrahmen an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

Aus EP 2 413 538 A1 ist ein Verfahren zur redundanten Kommunikation in einem Kommunikationssystem bekannt, das mehrere Kommunikationsnetze umfaßt. Die Kommunikationsnetze sind über zumindest einen Kopplungsknoten miteinander verbunden. Eine Rückübertragung von Daten, die aus einem ersten Kommunikationsnetz stammen, aus einem zweiten Kommunikationsnetz zurück in das erste Kommunikationsnetz wird auf Grund einer vor Datenübertragung definierten Information verhindert.

Der vorliegenden Erfindung liegt die Aufgabe zugrunde, ein leistungsfähiges und kostengünstiges Kommunikationsgerät zur effizienten Ankopplung einer Mehrzahl von HSR- bzw. PRP-Netzsegmenten an ein redundanzfreies Teilnetz oder an einen einfach angebundenen Netzknoten und ein Verfahren zum Betrieb eines solchen Kommunikationsgeräts anzugeben.

Diese Aufgabe wird erfindungsgemäß durch ein Kommunikationsgerät mit den in Anspruch 1 angegebenen Merkmalen und durch ein Verfahren mit den in Anspruch 8 angegebenen Merkmalen gelöst. Vorteilhafte Weiterbildungen der vorliegenden Erfindung sind in den abhängigen Ansprüchen angegeben.

Das erfindungsgemäße Kommunikationsgerät für ein redundant betreibbares industrielles Kommunikationsnetz umfaßt zumindest eine erste und eine zweite Sende- und Empfangseinheit, die jeweils eine Schnittstelle für eine Netzverbindung des industriellen Kommunikationsnetzes aufweisen. Dabei weisen beide Sende- und Empfangseinheiten eine identische Netzadresse und einen identischen Geräteidentifikator auf. Bei dem Geräteidentifikator kann es sich beispielsweise um eine MAC-Adresse handeln. Mit der ersten und zweiten Sende- und Empfangseinheit ist eine Signalverarbeitungseinheit verbunden. Die Signalverarbeitungseinheit weist eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten auf. Die Redundanzbehandlungseinheit umfaßt außerdem eine Filtereinheit, die für eine Detektion empfangener redundanter Nachrichten eingerichtet ist. Je nach Protokollebene kann eine Nachricht beispielsweise durch ein Datensegment, ein Datenpaket oder einen Datenrahmen repräsentiert werden.

Mit der Signalverarbeitungseinheit ist erfindungsgemäß ein Koppelelement verbunden, über das ein einfach angebundener Netzknoten oder ein redundanzfreies Teilnetz mit der Signalverarbeitungseinheit verbunden ist. Das Koppelelement ist vorzugsweise ein Hochgeschwindigkeitsbus, über den beispielsweise weitere einfach angebundene Netzknoten oder redundanzfreie Teilnetze mit der Signalverarbeitungseinheit verbunden sein können. Alternativ hierzu kann das Koppelelement grundsätzlich auch mittels eines Matrix-Schaltnetzes realisiert sein. Eine Datenübertragung innerhalb des industriellen Kommunikationsnetzes kann beispielsweise entsprechend High-availability Seamless Redundancy bzw. entsprechend Parallel Redundancy Protocol erfolgen.

Darüber hinaus ist die Signalverarbeitungseinheit erfindungsgemäß über das Koppelelement mit einer Mehrzahl von ersten und zweiten Sende- und Empfangseinheiten verbunden. Dabei weisen jeweils eine erste Sende- und Empfangseinheit und eine dieser zugeordnete zweite Sende- und Empfangseinheit eine identische Netzadresse und einen identischen Geräteidentifikator auf. Dem Koppelelement ist eine Steuerungseinheit zugeordnet, die für einen Betrieb von virtuellen lokalen Netzen eingerichtet ist. Unter virtuelle lokale Netze sind beispielsweise als VLAN bezeichnete logische Gruppierungen von Kommunikationsteilnehmern bzw. Anschlüssen zu subsumieren. Für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordneten Anschluß ist jeweils ein virtuelles lokales Netz eingerichtet. Eine Einrichtung eines virtuellen lokalen Netzes kann dabei portbasiert oder dynamisch erfolgen. Des weiteren ist die Signalverarbeitungseinheit zur parallelen Weiterleitung zu sendender Nachrichten und zur Detektion empfangener redundanter Nachrichten für sämtliche ersten und zweiten Sende- und Empfangseinheiten anhand einer Kennung des jeweiligen virtuellen lokalen Netzes eingerichtet.

Das erfindungsgemäße Kommunikationsgerät ermöglicht eine Kopplung mehrerer HSR- oder PRP-Netzsegmente mit nur einer Signalverarbeitungseinheit. Die Signalverarbeitungseinheit ist vorzugsweise mittels eines Field Programmable Gate Arrays (FPGA) realisiert, und das Koppelelement ist beispielsweise ein Backplane Switch mit zugeordnetem Controller. Somit kann ein FPGA quasi als Coprozessor für einen Backplane Switch Controller Netzkopplungsaufgaben übernehmen. Außerdem kann der Backplane Switch über zumindest einen Interlink-Anschluß mit dem einfach angebundenen Netzknoten oder redundanzfreien Teilnetz mit der Signalverarbeitungseinheit verbunden sein. Da Backplane Switch Controller üblicherweise eine VLAN-Funktionalität aufweisen, kann eine Anbindung eines FPGA als Coprozessor für einen Backplane Switch vereinfacht werden. Das FPGA kann nämlich anhand jeweiliger VLAN-Kennungen in Datenrahmen Nachrichten nach jeweiligen HSR- oder PRP-Netzsegmenten differenziert behandeln. Auf diese Weise ist eine erhebliche Aufwandsreduktion für eine Kopplung mehrerer redundanter Netzsegmente möglich. Dies wirkt sich einerseits Herstellungskosten und Energieverbrauch des erfindungsgemäßen Kommunikationsgeräts, andererseits aber auch auf einen geringeren Platzbedarf durch kompaktere Abmessungen aus.

Zusätzlich kann ein FPGA zur Speicherung einer Tabelle (proxy node table) mit Angaben zu sämtlichen mit dem Koppelelement verbundenen einfach angebundenen Netzknoten genutzt werden. Dies ermöglicht eine einfache Verwaltung von mit dem erfindungsgemäßen Kommunikationsgerät verbundenen einfach angebundenen Netzknoten. Daher kann das erfindungsgemäße Kommunikationsgerät als Grundlage genutzt werden, um auf einfache Weise Geräte wie HSR/PRP-Proxy oder HSR/PRP-RedBox zu realisieren. Grundsätzlich kann das erfindungsgemäße Kommunikationsgerät je nach Anwendungsgebiet als RedBox, QuadBox oder HSR-PRP-Koppler ausgeführt sein. Unterschiedliche Anwendungsgebiete stellen somit keine Einschränkung für eine Verwendbarkeit des erfindungsgemäßen Kommunikationsgeräts dar. Vorteilhafterweise ist ein Backplane Switch auf einen mehrfachen Datendurchsatz im Vergleich zu unterlagerten redundanten Netzsegmenten ausgelegt. Sind beispielsweise mehrere zu koppelnden HSR-Ringe in 1OOMBit-Technik ausgeführt, kommt es bei Verwendung eines Backplane Switch in IGBit-Technik bei einer typischen Anzahl zu koppelnder HSR-Ringe nicht zu Durchsatzproblemen.

Entsprechend einer bevorzugten Weiterbildung des erfindungsgemäßen Kommunikationsgeräts ist das Koppelelement mit einer Mehrzahl einfach angebundener Netzknoten oder redundanzfreier Teilnetze verbunden. Dabei ist für den einfach angebundenen Netzknoten oder den redundanzfreien Teilnetzen zugeordnete Anschlüsse sowie dem der Signalverarbeitungseinheit zugeordneten Anschluß ein zusätzliches virtuelles lokales Netz eingerichtet. Damit können mehrere redundante HSR- oder PRP-Netzsegmente auf einfache Weise mit mehreren redundanzfreien Netzsegmenten verbunden werden. Zur Leistungs- bzw. Durchsatzsteigerung können die Signalverarbeitungseinheit und das Koppelelement darüber hinaus über eine Mehrzahl von Anschlüssen miteinander verbunden sein. Hierzu ist lediglich eine Konfigurationsanpassung der virtuellen lokalen Netze erforderlich.

Zueinander redundante Nachrichten sind entsprechend einer weiteren Ausgestaltung des erfindungsgemäßen Kommunikationsgeräts durch eine einheitliche Sequenznummer gekennzeichnet. Dabei ist der Signalverarbeitungseinheit eine Speichereinheit zugeordnet, die für eine Speicherung von Sequenznummern bereits fehlerfrei empfangener Nachrichten eingerichtet ist. Zudem ist die Redundanzbehandlungseinheit bei dieser weiteren Ausgestaltung für eine Überprüfung auf eine bereits gespeicherte Sequenznummer bei Empfang einer neuen Nachricht eingerichtet. Auf diese Weise ist eine Entlastung des Koppelelements von einer Ermittlung und Behandlung redundant gesendeter Nachrichten möglich, so daß eine entsprechende Funktionalität in einen auf der Signalverarbeitungseinheit basierenden Coprozessor für das Koppelelement integriert werden kann.

Entsprechend dem erfindungsgemäßen Verfahren zum Betrieb eines Kommunikationsgeräts in einem redundanten industriellen Kommunikationsnetz umfaßt das Kommunikationsgerät zumindest eine erste und eine zweite Sende- und Empfangseinheit, die jeweils eine Schnittstelle für eine Netzverbindung des industriellen Kommunikationsnetzes aufweisen. Dabei weisen beide Sende- und Empfangseinheiten eine identische Netzadresse und einen identischen Geräteidentifikator auf. Mit der ersten und zweiten Sende- und Empfangseinheit ist eine Signalverarbeitungseinheit verbunden, die zu sendende Nachrichten parallel an beide Sendeeinheiten weiterleitet und von den Empfangseinheiten empfangene redundante Nachrichten detektiert. Mit der Signalverarbeitungseinheit wird ein Koppelelement verbunden, über das ein einfach angebundener Netzknoten oder ein redundanzfreies Teilnetz mit der Signalverarbeitungseinheit verbunden ist. Innerhalb des industriellen Kommunikationsnetzes können Nachrichten beispielsweise entsprechend High-availability Seamless Redundancy bzw. entsprechend Parallel Redundancy Protocol übertragen werden.

Die Signalverarbeitungseinheit wird entsprechend dem erfindungsgemäßen Verfahren über das Koppelelement mit einer Mehrzahl von ersten und zweiten Sende- und Empfangseinheiten verbunden. Dabei weisen jeweils eine erste Sende- und Empfangseinheit und eine dieser zugeordnete zweite Sende- und Empfangseinheit eine identische Netzadresse und einen identischen Geräteidentifikator auf. Dem Koppelelement ist ferner eine Steuerungseinheit zugeordnet, die für einen Betrieb von virtuellen lokalen Netzen eingerichtet wird. Für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordneten Anschluß wird jeweils ein virtuelles lokales Netz eingerichtet. Die Signalverarbeitungseinheit leitet für sämtliche ersten und zweiten Sende- und Empfangseinheiten anhand einer Kennung des jeweiligen virtuellen lokalen Netzes zu sendende Nachrichten parallel an die jeweilige erste und zweite Sende- und Empfangseinheit weiter und detektiert empfangene redundante Nachrichten. Die Kennung eines virtuellen lokalen Netzes kann beispielsweise mittels Frame-Tagging entsprechend IEEE 802.1Q, Inter-Switch Link (ISL) oder FDDI 802.10 (Fiber Distributed Data Interface) realisiert sein. Insgesamt ermöglicht das erfindungsgemäße Verfahren eine erhebliche Aufwandsreduktion für eine Kopplung mehrerer redundanter Netzsegmente und insbesondere eine Kopplung mehrerer HSR- oder PRP-Netzsegmente mit nur einer Signalverarbeitungseinheit.

Eine Leistungsverbesserung durch Durchsatzsteigerung ergibt sich entsprechend einer vorteilhaften Ausgestaltung des erfindungsgemäßen Verfahrens, wenn die Signalverarbeitungseinheit und das Koppelelement über eine Mehrzahl von Anschlüssen miteinander verbunden werden. Entsprechend einer weiteren Ausgestaltung des erfindungsgemäßen Verfahrens wird das Koppelelement mit einer Mehrzahl einfach angebundener Netzknoten oder redundanzfreier Teilnetze verbunden. Dabei wird für den einfach angebundenen Netzknoten oder den redundanzfreien Teilnetzen zugeordnete Anschlüsse sowie dem der Signalverarbeitungseinheit zugeordneten Anschluß ein zusätzliches virtuelles lokales Netz eingerichtet. Auf diese Weise können mehrere redundante HSR- oder PRP-Netzsegmente effizient mit mehreren redundanzfreien Netzsegmenten gekoppelt werden. Zueinander redundante Nachrichten werden entsprechend einer bevorzugten Ausgestaltung des erfindungsgemäßen Verfahrens durch eine einheitliche Sequenznummer gekennzeichnet. Darüber hinaus werden vorzugsweise in einer der Signalverarbeitungseinheit zugeordneten Speichereinheit Sequenznummern von bereits fehlerfrei empfangenen Nachrichten gespeichert. Bei Empfang einer neuen Nachricht kann die Signalverarbeitungseinheit deren Sequenznummer damit auf Übereinstimmung mit einer bereits gespeicherten Sequenznummer auf einfache Weise überprüfen.

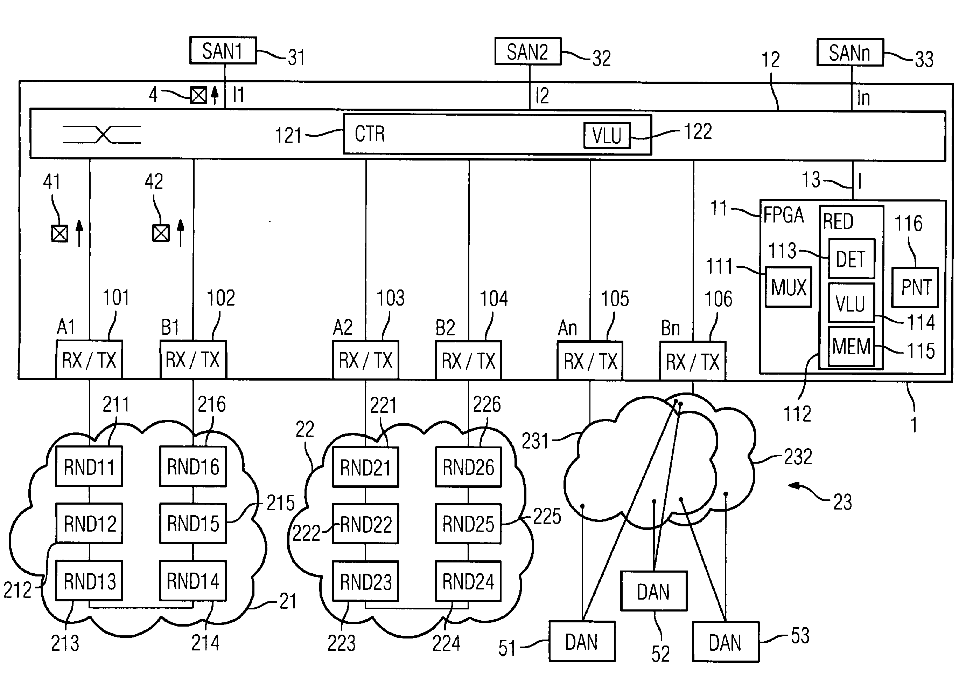

Die vorliegende Erfindung wird nachfolgend an einem Ausführungsbeispiel anhand der Zeichnung näher erläutert. Es zeigt die
- Figur: eine schematische Darstellung eines Kommunikationsgeräts für ein redundant betreibbares industrielles Kommunikationsnetz.

Das in der Figur dargestellte Kommunikationsgerät 1 für ein redundant betreibbares industrielles Kommunikationsnetz umfaßt mehrere erste 101, 103, 105 und zweite Sende- und Empfangseinheiten 102, 104, 106, die jeweils eine Schnittstelle für eine Netzverbindung eines redundant betriebenen Teilnetzes 21-23 aufweisen. Im vorliegenden Ausführungsbeispiel werden Nachrichten innerhalb eines ersten und zweiten Teilnetzes 21, 22 entsprechend High Availability Seamless Redundancy, während Nachrichten innerhalb eines dritten Teilnetzes 23 entsprechend Parallel Redundancy Protocol übertragen werden. Dabei umfaßt eine Nachricht zumindest einen Datenrahmen.

Die ersten beiden Teilnetze 21, 22 umfassen jeweils mehrere in einer Ringstruktur über Netzverbindungen miteinander verbundene HSR-Netzknoten 211-216, 221-226. Hierzu kann beispielsweise ein HSR-Netzknoten zählen, der einem SCADA-System (supervisory control and data acquisition) eines industriellen Fertigungs- oder Prozeßautomatisierungssystems zugeordnet ist. In die Ringstruktur der ersten beiden Teilnetze 21, 22 ist auch das in der Figur dargestellte Kommunikationsgerät 1 eingebunden, das im vorliegenden Ausführungsbeispiel eine mit mehreren redundant betriebenen Teilnetzen 21-23 verbundene RedBox darstellt. Das dritte Teilnetz 23 umfaßt zwei zueinander redundante Netzsegmente 231, 232, an die mehrere PRP-Netzknoten 51-53 doppelt angebunden sind.

Einander zugeordnete erste und zweite Sende- und Empfangseinheiten 101-102, 103-104, 105-106 weisen eine identische Netzadresse und eine identische MAC-Adresse auf. Über ein durch einen Backplane Switch realisiertes Koppelelement 12 sind die ersten und zweiten Sende- und Empfangseinheiten 101-106 mit einer durch ein Field Programmable Gate Array (FPGA) realisierte Signalverarbeitungseinheit 11 verbunden. Dabei sind Signalverarbeitungseinheit 11 und das Koppelelement 12 im vorliegenden Ausführungsbeispiel lediglich über einen einzelnen Anschluß 13 miteinander verbunden. Grundsätzlich können die Signalverarbeitungseinheit 11 und das Koppelelement 12 zur Leistungssteigerung auch über eine Mehrzahl von Anschlüssen miteinander verbunden werden.

Die Signalverarbeitungseinheit 11 weist eine Multiplexereinheit 111 zur parallelen Weiterleitung zu sendender Nachrichten an die Sende- und Empfangseinheiten 101-106 und eine Redundanzbehandlungseinheit 112 zur Verarbeitung von den durch die Sende- und Empfangseinheiten 101-106 empfangenen Nachrichten 41, 42 auf. Die Redundanzbehandlungseinheit 112 umfaßt eine Filtereinheit 113, die für eine Detektion empfangener redundanter Nachrichten eingerichtet ist.

Das einen zugeordneten Controller 121 aufweisende Koppelelement 12 ist über jeweils einen Interlink-Anschluß 11, 12, In mit einem einfach angebundenen Netzknoten 31-33 verbunden. Grundsätzlich könnte das Koppelelement 12 auch mit einem oder mehreren redundanzfreien Teilnetzen verbunden sein. Nachfolgende Ausführungen gelten für einen derartigen Anwendungsfall gleichermaßen.

Die Signalverarbeitungseinheit 11 weist zusätzlich eine Speichereinheit 116 auf, in der eine Tabelle (proxy node table) mit Angaben zu sämtlichen mit dem Koppelelement 12 verbundenen einfach angebundenen Netzknoten 31-33 gespeichert ist. Dies ermöglicht eine einfache Verwaltung von mit dem Kommunikationsgerät 1 verbundenen einfach angebundenen Netzknoten 31-33.

Der Controller 121 des Koppelelements 12 umfaßt eine Steuerungseinheit 122 zur Konfiguration und Verwaltung von virtuellen lokalen Netzen zur Zusammenfassung von Teilnehmer- bzw. Anschlußgruppen über Grenzen von Broadcast-Domänen hinweg. Damit ist der Controller 121 für einen Betrieb von virtuellen lokalen Netzen eingerichtet. Für jedes Paar A1/B1, A2/B2, An/Bn von einer ersten Sende- und Empfangseinheit 101, 103, 105 und einer dieser zugeordneten zweiten Sende- und Empfangseinheit 102, 104, 106 zugeordneten Anschlüssen sowie dem Anschluß 13 zwischen Signalverarbeitungseinheit 11 und Koppelelement wird jeweils ein virtuelles lokales Netz eingerichtet. Einem virtuellen lokalen Netz zugeordnete Nachrichten werden beispielsweise durch eine in einen jeweiligen Datenrahmen eingefügte Kennung des virtuellen lokalen Netzes gekennzeichnet. Diese Kennung wird durch eine spezielle Auswerteeinheit 114 der Redundanzbehandlungseinheit 112 ausgewertet. Damit kann die Signalverarbeitungseinheit 11 für sämtliche ersten und zweiten Sende- und Empfangseinheiten 101-106 anhand der Kennung des jeweiligen virtuellen lokalen Netzes zu sendende Nachrichten parallel an die jeweilige erste und zweite Sende- und Empfangseinheit weiterleiten und empfangene redundante Nachrichten detektieren. Somit ist lediglich eine Signalverarbeitungseinheit 11 anstelle einer Vielzahl von Signalverarbeitungseinheiten erforderlich, die zur parallelen Weiterleitung zu sendender Nachrichten und zur Detektion empfangener redundanter Nachrichten für sämtliche ersten und zweiten Sende- und Empfangseinheiten 101-106 anhand einer Kennung des jeweiligen virtuellen lokalen Netzes eingerichtet ist. In entsprechender Weise wird auch für den einfach angebundenen Netzknoten 31-33 oder den redundanzfreien Teilnetzen zugeordnete Anschlüsse sowie dem Anschluß 13 zwischen Signalverarbeitungseinheit 11 und Koppelelement 12 ein zusätzliches virtuelles lokales Netz eingerichtet.

Zueinander redundante Nachrichten werden sowohl bei einer Datenübertragung entsprechend High-availability Seamless Redundancy als auch bei einer Datenübertragung entsprechend Parallel Redundancy Protocol durch eine einheitliche Sequenznummer gekennzeichnet. Daher ist der Redundanzbehandlungseinheit 112 eine Speichereinheit 115 zugeordnet, die für eine Speicherung von Sequenznummern bereits fehlerfrei empfangener Nachrichten bzw. für eine für eine Speicherung von bereits fehlerfrei empfangenen Nachrichten eingerichtet ist. Auf dieser Grundlage überprüft die Signalverarbeitungseinheit 11 bei Empfang einer neuen Nachricht dessen Sequenznummer auf Übereinstimmung mit einer bereits gespeicherten Sequenznummer und veranlaßt eine Redundanzbehandlung, und zwar für alle mit dem Kommunikationsgerät 1 verbundenen redundant betriebenen Teilnetze 21-23. So wird nach Überprüfung beispielsweise lediglich eine der beiden aus dem ersten Teilnetz 21 redundant empfangenen Nachrichten 41, 42 als resultierende Nachricht 4 an einen einfach angebundenen Ziel-Netzknoten 31 weitergeleitet. Die Merkmale der vorangehend beschriebenen Ausführungsbeispiele können sowohl einzeln als auch in beschriebener Kombination miteinander realisiert sein.

## Patentansprüche

1. Kommunikationsgerät für ein redundant betreibbares industrielles Kommunikationsnetz mit
- zumindest einer ersten und einer zweiten Sende- und Empfangseinheit (101,102), die jeweils eine Schnittstelle für eine Netzverbindung des industriellen Kommunikationsnetzes aufweisen, wobei beide Sende- und Empfangseinheiten eine identische Netzadresse und einen identischen Geräteidentifikator aufweisen,
- einer mit der ersten und zweiten Sende- und Empfangseinheit verbundenen Signalverarbeitungseinheit (13), die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist, wobei die Redundanzbehandlungseinheit eine Filtereinheit umfaßt, die für eine Detektion empfangener redundanter Nachrichten eingerichtet ist,
- einem mit der Signalverarbeitungseinheit verbundenen Koppelelement (12), über das ein einfach angebundener Netzknoten oder ein redundanzfreies Teilnetz mit der Signalverarbeitungseinheit verbunden ist,
**dadurch gekennzeichnet, daß**
- die Signalverarbeitungseinheit über das Koppelelement mit einer Mehrzahi von ersten und zweiten Sende- und Empfangseinheiten (101, 102, 103, 104) verbunden ist, wobei jeweils eine erste Sende- und Empfangseinheit und eine dieser zugeordnete zweite Sende- und Empfangseinheit eine identische Netzadresse und einen identischen Geräteidentifikatoraufweisen,
- dem Koppelelement eine Steuerungseinheit (121) zugeordnet ist, die für einen Betrieb von virtuellen lokalen Netzen eingerichtet ist, wobei für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordneten Anschluß jeweils ein virtuelles lokales Netz eingerichtet ist,
- die Signalverarbeitungseinheit zur parallelen Weiterleitung zu sendender Nachrichten und zur Detektion empfangener redundanter Nachrichten für sämtliche ersten und zweiten Sende- und Empfangseinheiten anhand einer Kennung des jeweiligen virtuellen lokalen Netzes eingerichtet ist.

2. Kömmunikationsgerät nach Anspruch 1,
das Koppelelement mit einer Mehrzahl einfach angebundener Netzknoten oder redundanzfreier Teilnetze verbunden ist, wobei für den einfach angebundenen Netzknoten oder den redundanzfreien Teilnetzen zugeordnete Anschlüsse sowie dem der Signalverarbeitungseinheit zugeordneten Anschluß ein zusätzliches virtuelles lokales Netz eingerichtet ist.

3. Kommunikationsgerät nach einem der Ansprüche 1 oder 2,
bei dem die Signalverarbeitungseinheit und das Koppelelement über eine Mehrzahl von Anschlüssen miteinander verbunden sind.

4. Kommunikationsgerät nach einem der Ansprüche 1 bis 3,
bei dem zueinander redundante Nachrichten durch eine einheitliche Sequenznummer gekennzeichnet sind, und bei dem der Signalverarbeitungseinheit eine Speichereinheit zugeordnet ist, die für eine Speicherung von Sequenznummern bereits fehlerfrei empfangener Nachrichten eingerichtet ist, und bei dem die Redundanzbehandlungseinheit für eine Überprüfung auf eine bereits gespeicherte Sequenznummer bei Empfang einer neuen Nachricht eingerichtet ist.

5. Kommunikationsgerät nach einem der Ansprüche 1 bis 4,
bei dem die Signalverarbeitungseinheit mittels eines Field Programmable Gate Arrays realisiert ist, und bei dem das Koppelelement ein Backplane Switch mit zugeordneten Controller ist, und bei dem der Backplane Switch über zumindest einen Interlink-Anschluß mit dem einfach angebundenen Netzknoten oder redundanzfreien Teilnetz verbunden ist.

6. Kommunikationsgerät nach einem der Ansprüche 1 bis 5,
bei dem eine Datenübertragung entsprechend High-availability Seamless Redundancy und/oder entsprechend Parallel Redundancy Protocol erfolgt.

7. Verfahren zum Betrieb eines Kommunikationsgeräts in einem redundanten industriellen Kommunikationsnetz, bei dem
- das Kommunikationsgeräts zumindest eine ersten und eine zweite Sende- und Empfangseinheit umfaßt, die jeweils eine Schnittstelle für eine Netzverbindung des industriellen Kommunikationsnetzes aufweisen, wobei beide Sende-und Empfangseinheiten eine identische Netzadresse und einen identischen Geräteidentifikator aufweisen,
- mit der ersten und zweiten Sende- und Empfangseinheit eine Signalverarbeitungseinheit verbunden wird, die zu sendende Nachrichten parallel an beide Sendeeinheiten weiterleitet und von den Empfangseinheiten empfangene redundante Nachrichten detektiert,
- mit der Signalverarbeitungseinheit ein Koppelelement verbunden wird, über das ein einfach angebundener Netzknoten oder ein redundanzfreies Teilnetz mit der Signalverarbeitungseinheit verbunden ist,
**dadurch gekennzeichnet, daß**
- die Signalverarbeitungseinheit über das Koppelelement mit einer Mehrzahl von ersten und zweiten Sende- und Empfangseinheiten verbunden wird, wobei jeweils eine erste Sende- und Empfangseinheit und eine dieser zugeordnete zweite Sende- und Empfangseinheit eine identische Netzadresse und einen identischen Geräteidentifikator aufweisen,
- dem Koppelelement eine Steuerungseinheit zugeordnet ist, die für einen Betrieb von virtuellen lokalen Netzen eingerichtet wird, wobei für jedes Paar von einer ersten Sende- und Empfangseinheit und einer dieser zugeordneten zweiten Sende- und Empfangseinheit zugeordneten Anschlüssen sowie einem der Signalverarbeitungseinheit zugeordnetten Anschluß jeweils ein virtuelles lokales Netz eingerichtet wird,
- die Signalverarbeitungseinheit für sämtliche ersten und zweiten Sende- und Empfangseinheiten anhand einer Kennung des jeweiligen virtuellen lokalen Netzes zu sendende Nachrichten parallel an die jeweilige erste und zweite Sende- und Empfangseinheit weiterleitet und empfangene redundante Nachrichten detektiert.

8. Verfahren nach Anspruch 7,
bei dem das Koppelelement mit einer Mehrzahl einfach angebundener Netzknoten oder redundanzfreier Teilnetze verbunden wird, wobei für den einfach angebundenen Netzknoten oder den redundanzfreien Teilnetzen zugeordnete Anschlüsse sowie dem der Signalverarbeitungseinheit zugeordneten Anschluß ein zusätzliches virtuelles lokales Netz eingerichtet wird.

9. Verfahren nach einem der Ansprüche 7 oder 8,
bei dem die Signalverarbeitungseinheit und das Koppelelement über eine Mehrzahl von Anschlüssen miteinander verbunden werden.

10. Verfahren nach einem der Ansprüche 7 bis 9,
bei dem zueinander redundante Nachrichten durch eine einheitliche Sequenznummer gekennzeichnet werden, und bei dem in einer der Signalverarbeitungseinheit zugeordneten Speichereinheit Sequenznummern von bereits fehlerfrei empfangenen Nachrichten gespeichert werden, und bei dem die Signalverarbeitungseinheit bei Empfang einer neuen Nachricht dessen Sequenznummer auf Übereinstimmung mit einer bereits gespeicherten Sequenznummer überprüft.

11. Verfahren nach einem der Ansprüche 7 bis 10,
bei dem Nachrichten entsprechend High Availability Seamless Redundancy und/oder entsprechend Parallel Redundancy Protocol übertragen werden.

## Claims

1. Communication device for a redundantly operable industrial communication network comprising
- at least one first and one second transmitting and receiving unit (101, 102) each having an interface for a network connection of the industrial communication network, both transmitting and receiving units having an identical network address and an identical device identifier,
- a signal processing unit (13) which is connected to the first and second transmitting and receiving units and has a multiplexer unit for the parallel forwarding of messages to be transmitted to both transmitting units and a redundancy handling unit for processing messages received by both receiving units, the redundancy handling unit comprising a filter unit which is set up to detect received redundant messages,
- a coupling element (12) which is connected to the signal processing unit and is used to connect a singly linked network node or a redundancy-free subnetwork to the signal processing unit,
**characterized in that**
- the signal processing unit is connected to a plurality of first and second transmitting and receiving units (101, 102, 103, 104) via the coupling element, a first transmitting and receiving unit and a second transmitting and receiving unit assigned to the latter each having an identical network address and an identical device identifier,
- the coupling element is assigned a control unit (121) which is set up to operate virtual local networks, a virtual local network respectively being set up for each pair of connections assigned to a first transmitting and receiving unit and to a second transmitting and receiving unit assigned to the latter and for a connection assigned to the signal processing unit,
- the signal processing unit is set up for the parallel forwarding of messages to be transmitted and for the detection of received redundant messages for all first and second transmitting and receiving units using an identifier of the respective virtual local network.

2. Communication device according to Claim 1,
in which the coupling element is connected to a plurality of singly linked network nodes or redundancy-free subnetworks, an additional virtual local network being set up for connections assigned to the singly linked network nodes or the redundancy-free subnetworks and for the connection assigned to the signal processing unit.

3. Communication device according to either of Claims 1 and 2,
in which the signal processing unit and the coupling element are connected to one another via a plurality of connections.

4. Communication device according to one of Claims 1 to 3,
in which messages which are redundant with respect to one another are identified by a uniform sequence number, and in which the signal processing unit is assigned a storage unit which is set up to store sequence numbers of messages which have already been received without errors, and in which the redundancy handling unit is set up to check for a sequence number which has already been stored when a new message is received.

5. Communication device according to one of Claims 1 to 4,
in which the signal processing unit is realized by means of a field programmable gate array, and in which the coupling element is a backplane switch with an assigned controller, and in which the backplane switch is connected to the singly linked network node or redundancy-free subnetwork via at least one interlink connection.

6. Communication device according to one of Claims 1 to 5,
in which data are transmitted in accordance with high-availability seamless redundancy and/or in accordance with the parallel redundancy protocol.

7. Method for operating a communication device in a redundant industrial communication network, in which
- the communication device comprises at least one first and one second transmitting and receiving unit each having an interface for a network connection of the industrial communication network, both transmitting and receiving units having an identical network address and an identical device identifier,
- a signal processing unit is connected to the first and second transmitting and receiving units, which signal processing unit forwards messages to be transmitted to both transmitting units in a parallel manner and detects redundant messages which have been received by the receiving units,
- a coupling element is connected to the signal processing unit and is used to connect a singly linked network node or a redundancy-free subnetwork to the signal processing unit,
**characterized in that**
- the signal processing unit is connected to a plurality of first and second transmitting and receiving units via the coupling element, a first transmitting and receiving unit and a second transmitting and receiving unit assigned to the latter each having an identical network address and an identical device identifier,
- the coupling element is assigned a control unit which is set up to operate virtual local networks, a virtual local network respectively being set up for each pair of connections assigned to a first transmitting and receiving unit and to a second transmitting and receiving unit assigned to the latter and for a connection assigned to the signal processing unit,
- the signal processing unit, for all first and second transmitting and receiving units, forwards messages to be transmitted to the respective first and second transmitting and receiving units in a parallel manner using an identifier of the respective virtual local network and detects received redundant messages.

8. Method according to Claim 7,
in which the coupling element is connected to a plurality of singly linked network nodes or redundancy-free subnetworks, an additional virtual local network being set up for connections assigned to the singly linked network nodes or the redundancy-free subnetworks and for the connection assigned to the signal processing unit.

9. Method according to either of Claims 7 and 8,
in which the signal processing unit and the coupling element are connected to one another via a plurality of connections.

10. Method according to one of Claims 7 to 9,
in which messages which are redundant with respect to one another are identified by a uniform sequence number, and in which sequence numbers of messages which have already been received without errors are stored in a storage unit assigned to the signal processing unit, and in which, when a new message is received, the signal processing unit checks its sequence number for a match with a sequence number which has already been stored.

11. Method according to one of Claims 7 to 10,
in which messages are transmitted in accordance with high-availability seamless redundancy and/or in accordance with the parallel redundancy protocol.

## Revendications

1. Appareil de communication pour un réseau de communication industriel pouvant fonctionner de manière redondante comprenant
- au moins une première et une deuxième unités ( 101, 102 ) d'émission et de réception, qui ont respectivement une interface pour une liaison au réseau de communication industriel, les deux unités d'émission et de réception ayant une adresse de réseau identique et un identificateur d'appareil identique,
- une unité ( 13 ) de traitement du signal, qui est reliée à la première et à la deuxième unités d'émission et de réception et qui a une unité de multiplexage pour l'acheminement en parallèle de messages à émettre aux deux unités d'émission et une unité de traitement de redondance pour le traitement de messages reçus par les deux unités de réception, l'unité de traitement de redondance comprenant une unité de filtrage, qui est agencée pour détecter la réception de messages redondants,
- un élément ( 12 ) de couplage, qui est relié à l'unité de traitement du signal, et par lequel un noeud de réseau relié simplement ou un réseau partiel sans redondance est relié à l'unité de traitement du signal,
**caractérisé en ce que**
- l'unité de traitement du signal est reliée par l'élément de couplage à une multiplicité de première et deuxième unités ( 101, 102, 103, 104 ) d'émission et de réception, respectivement une première unité d'émission et de réception et une deuxième unité d'émission et de réception associée à celle-ci ayant une adresse de réseau identique et un identificateur d'appareil identique,
- il est associé à l'élément de couplage une unité ( 121 ) de commande, qui est agencée pour un fonctionnement de réseaux locaux virtuels, un réseau local virtuel étant agencé respectivement pour chaque paire de bornes associées d'une première unité d'émission et de réception et d'une deuxième unité d'émission et de réception associée à celle-ci ainsi que pour une borne associée à l'unité de traitement du signal,
- l'unité de traitement du signal est agencée pour l'acheminement en parallèle de messages à émettre et pour la détection de messages redondants reçus pour l'ensemble des première et deuxième unités d'émission et de réception, au moyen d'une caractérisation du réseau local virtuel respectif.

2. Appareil de communication suivant la revendication 1,
l'élément de couplage est relié à une multiplicité de noeuds de réseau reliés simplement ou de sous-réseaux sans redondance, dans lequel un réseau local virtuel supplémentaire est agencé pour les bornes associées aux noeuds de réseau reliés simplement ou aux sous-réseaux sans redondance ainsi qu'à la borne associée à l'unité de traitement du signal.

3. Appareil de communication suivant l'une des revendications 1 ou 2,
dans lequel l'unité de traitement du signal et l'élément de couplage sont reliés l'un à l'autre par une multiplicité de bornes.

4. Appareil de communication suivant l'une des revendications 1 à 3,
dans lequel des messages redondants les uns par rapport aux autres sont **caractérisés par** un numéro de séquence unitaire, et dans lequel, à l'unité de traitement du signal est associée une unité de mémoire, qui est agencée pour mémoriser des numéros de séquence de messages reçus déjà sans erreur, et dans lequel l'unité de traitement de redondance est agencée pour contrôler, à la réception d'un message nouveau, si son numéro de séquence est déjà mémorisé.

5. Appareil de communication suivant l'une des revendications 1 à 4,
dans lequel l'unité de traitement du signal est réalisée au moyen d'un field programmable gate arrays, et dans lequel l'élément de couplage est un backplane switch à dispositif de commande associé, et dans lequel le backplane switch est relié aux noeuds de réseau reliés simplement ou aux sous-réseaux sans redondance par au moins une connexion interlink.

6. Appareil de communication suivant l'une des revendications 1 à 5,
dans lequel une transmission de données s'effectue conformément au protocole high-availability seamless redundancy et/ou conformément au protocole parallel redundancy.

7. Procédé pour faire fonctionner un appareil de communication
dans un réseau de communication industriel redondant, dans lequel
- l'appareil de communication comprend au moins une première et une deuxième unités d'émission et de réception, qui ont respectivement une interface pour une liaison au réseau de communication industriel, les unités d'émission et de réception ayant une adresse de réseau identique et un identificateur d'appareil identique,
- on relie à la première et à la deuxième unités d'émission et de réception une unité de traitement du signal, qui achemine les messages à émettre en parallèle aux deux unités d'émission et détecte des messages redondants reçus par les unités de réception,
- on relie à l'unité de traitement du signal un élément de couplage par lequel un noeud de réseau relié simplement ou un sous-réseau sans redondance est relié à l'unité de traitement du signal,
**caractérisé en ce que**
- on relie l'unité de traitement du signal par l'élément de couplage à une multiplicité de première et deuxième unités d'émission et de réception, respectivement une première unité d'émission et de réception et une deuxième unité d'émission et de réception associée à celle-ci ayant une adresse de réseau identique et un identificateur d'appareil identique,
- à l'élément de couplage est associée une unité de commande, qui est agencée pour un fonctionnement de réseaux locaux virtuels, dans lequel on agence, pour chaque paire, respectivement un réseau local virtuel de bornes associées à une première unité d'émission et de réception et à une deuxième unité d'émission et de réception associée à celle-ci ainsi qu'une borne associée à l'unité de traitement du signal,
- l'unité de traitement du signal achemine, pour l'ensemble des première et deuxième unités d'émission et de réception, au moyen d'une caractérisation du réseau local virtuel respectif, des messages à émettre en parallèle à la première et à la deuxième unités d'émission et de réception respective et détecte la réception de messages redondants.

8. Procédé suivant la revendication 7,
dans lequel on relie l'élément de couplage à une multiplicité de noeuds de réseau reliés simplement ou de sous-réseaux sans redondance, un réseau local virtuel supplémentaire étant agencé pour les bornes associées aux noeuds de réseau reliés simplement ou aux sous-réseaux sans redondance ainsi qu'à la borne associée à l'unité de traitement du signal.

9. Procédé suivant l'une des revendications 7 ou 8,
dans lequel l'unité de traitement du signal et l'élément de couplage sont reliés entre eux par une multiplicité de bornes.

10. Procédé suivant l'une des revendications 7 à 9,
dans lequel on caractérise des messages redondants les uns par rapport aux autres par un numéro de séquence unitaire, et dans lequel on mémorise, dans une unité de mémoire associée à l'unité de traitement du signal, des numéros de séquences de messages reçus déjà sans erreurs, et dans lequel l'unité de traitement du signal contrôle, à la réception d'un message nouveau, si son numéro de séquence coïncide avec un numéro de séquence déjà mémorisé.

11. Procédé suivant l'une des revendications 7 à 10,
dans lequel on transmet des messages conformément au protocole high availability seamless redundancy et/ou conformément au protocole parallel redundancy.
